**Europäisches Patentamt**

**European Patent Office**

**Office européen des brevets**

(11) Veröffentlichungsnummer: **0 501 107 A1**

# EUROPÄISCHE PATENTANMELDUNG

(21) Anmeldenummer: **92100219.2**

(22) Anmeldetag: **09.01.92**

(51) Int. Cl.5: **B23B 5/12**, B23B 29/24

(30) Priorität: **28.02.91 DE 4106277**

(43) Veröffentlichungstag der Anmeldung:
**02.09.92 Patentblatt 92/36**

(84) Benannte Vertragsstaaten:
**BE DE FR GB IT**

(71) Anmelder: **HETRAN Maschinen-Vertriebs GmbH**
**Alleestrasse 15 - 19**
**W-4817 Leopoldshöhe(DE)**

(72) Erfinder: **Schwerdfeger, Heinz**
**Bodelschwinghstrasse 15**
**W-4800 Bielefeld(DE)**

(74) Vertreter: **Thielking, Bodo, Dipl.-Ing. et al**
**Patentanwälte Dipl.-Ing. Bodo Thielking**
**Dipl.-Ing. Otto Elbertzhagen Gadderbaumer**
**Strasse 20**
**W-4800 Bielefeld 1(DE)**

(54) **Messerkopf, insbesondere für Schälmaschinen.**

(57) Ein Messerkopf, insbesondere für Schälmaschinen, besitzt zwei mit einem axialen Abstand zueinander angeordnete Hauptlager (4; 5) für eine Lagerung des umlaufenden Messerkopfteils mit Hohlwelle (6) sowie eine Verstelleinrichtung (22, 22a, 21a, 21b, 20, 17, 16) zum Zustellen der Werkzeuge (36). Die Verstelleinrichtung ist im Bereich des einen Hauptlagers (4) mit einem größeren radialen Abstand als dieses Hauptlager von der Drehachse (51) angeordnet. Die Werkzeuge (36) sind unmittelbar benachbart zu diesem Hauptlager (4) angeordnet. Eine solche Ausgestaltung hält die Lagerbelastungen geringer, als sie bei bekannten Konstruktionen auftreten.

Fig. 1

Die Erfindung betrifft einen Messerkopf, insbesondere für Schälmaschinen, nach dem Oberbegriff des Anspruchs 1.

Bei Maschinen zum Schälen von Rundmaterial laufen die Messerköpfe bei kleinen Materialdurchmessern mit hohen Drehzahlen um. Um diese hohen Drehzahlen erreichen zu können, müssen die Lager, in denen die Hohlwelle gelagert ist, möglichst klein im Durchmesser gehalten werden. Der Durchmesser der Hohlwelle seinerseits wird bestimmt vom größten Durchmesser des zu schälenden Materials. Weiterhin besteht an derartige Messerköpfe die Forderung, die Baulänge möglichst klein zu halten, damit das zu schälende Rundmaterial mit einem möglichst kleinen Abstand gehalten werden kann.

Bei einem bekannten Messerkopf der als bekannt vorausgesetzten Art (DE-PS 17 52 342) sind die Werkzeuge mit einem vergleichsweise großen Abstand von dem benachbarten Lager angeordnet. Darüber hinaus ist die bekannte Vorrichtung zum Verstellen der Werkzeuge groß und aufwendig.Bei dieser bekannten Lösung werden hohe Hebelkräfte auf die Lager ausgeübt.

Ausgehend von diesem Stand der Technik liegt der Erfindung die Aufgabe zugrunde,einen Messerkopf der als bekannt vorausgesetzten Art so auszubilden, daß die Belastung seiner Lager möglichst gering gehalten werden kann und ein ruhiger, störungsfreier Lauf der Hohlwelle auch mit hohen Drehzahlen erreichbar ist.

Die Lösung dieser Aufgabe erfolgt mit den Merkmalen des Kennzeichnungsteils von Anspruch 1.

Der erfindungsgemäße Messerkopf baut kurz. Die Verstelleinrichtung wird im Bereich des einen Hauptlagers gelagert. Dies hat die Folge, daß das auf die beiden Lager ausgeübte Moment wegen der Kürze des Hebelarms zwischen der Lagerstelle und dem Werkzeug klein gehalten werden kann. Die Anordnung der Werkzeuge unmittelbar zu dem im Bereich der Verstelleinrichtung angebrachten Hauptlager führt darüber hinaus zu der erwünschten verkürzten Baulänge des Messerkopfes. Die erfindungsgemäße Ausbildung des Messerkopfes führt dazu, daß die Qualität des geschälten Werkstückes wegen des erzielbaren sehr gleichmäßigen Laufs besonders hochwertig ist.

Bevorzugte Ausgestaltungen der Erfindung sind in den Unteransprüchen beschrieben. Eine Kühlmittelzufuhr zu den Werkzeugen durch Kühlmittelkanäle des Werkzeugträgers ist von besonderer Bedeutung und wesentlich auch bei Messerköpfen, die einen anderen Aufbau auweisen, als den vorstehend oder nachstehend beschribenen.

Nachstehend wird eine bevorzugte Ausführungsform der Erfindung anhand der Zeichnung im einzelnen erläutert. Es zeigen:

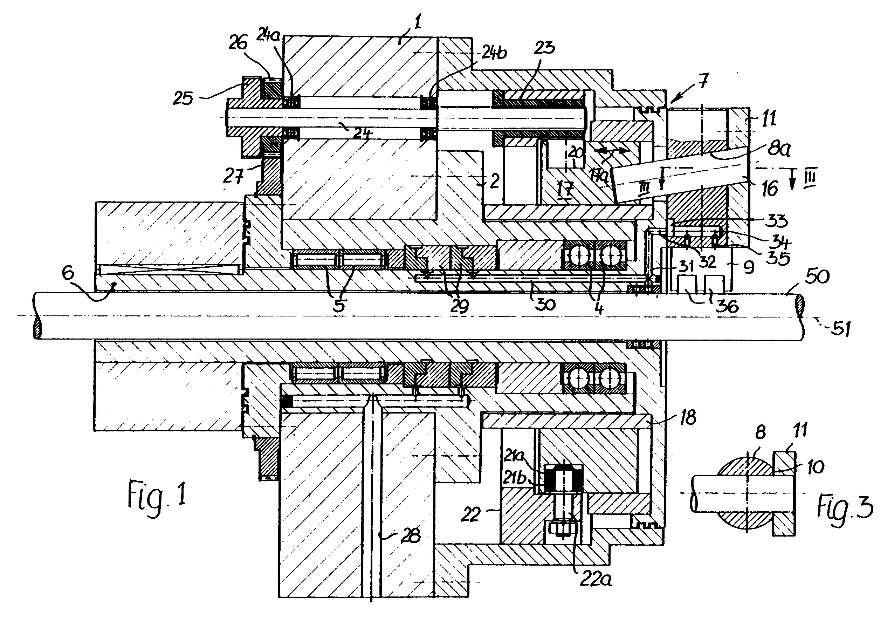

Figur 1 - einen Längsschnitt durch den Messerkopf,

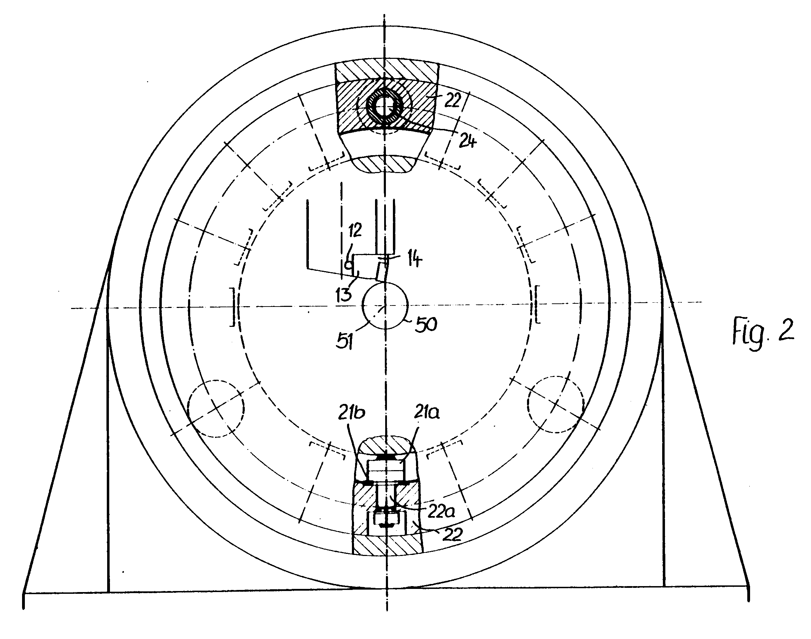

Figur 2 - eine Stirnansicht in Richtung des Pfeils II in Figur 1,

Figur 3 - einen Schnitt entlang Ebene III-III in Figur 1

Der Messerkopf besitzt ein Gehäuse 1, an dem eine Buchse 2 angeschraubt ist. Im Zentrum der Buchse 2 befinden sich zwei Hauptlager 4 und 5. Das Hauptlager 4 ist ein doppeltes Kugellager, das Hauptlager 5 ein doppelter Rollenlager. Die beiden Hauptlager 4 und 5 lagern die Hohlwelle 6. Durch die Hohlwelle 6 erstreckt sich das zu bearbeitende Rundmaterial 50.

Die Hohlwelle 6 ist Bestandteil des umlaufenden Messerkopfteils 7. Am umlaufenden Messerkopfteil sind insgesamt 4 Werkzeugträger 8 mit Werkzeughaltern 9 gelagert. An den Werkzeughaltern befinden sich die Werkzeuge 36. In den Zeichnungen sind Werkzeugträger, Werkzeughalter und Werkzeuge lediglich einfach dargestellt. Der Werkzeugträger 8 besitzt eine geneigt zur Drehachse 51 verlaufende Bohrung 8a,welche einen entsprechend geneigten Bolzen 16 umgreift. Der Bolzen 16 ist fest in einem Ringkörper 17 gelagert, der Teil einer Verstelleinrichtung ist. Der Ringkörper 17 kann in Richtung des Pfeils 17a in Richtung der Drehachse 51 verschoben werden.

Der Werkzeugträger 8 liegt mit einer Abflachung 10 an der Innenfläche eines Flacheisens 11 an (vgl. Figur 3). In dem Werkzeugträger 8 befindet sich eine Aussparung 13, die in eine Querbohrung 12 übergeht. In die Aussparung 13 und die Bohrung 12 paßt der Werkzeughalter 14 mit den Werkzeugen 36.

Die Verstellung des Werkzeughalters 8 im umlaufenden Messerkopfteil erfolgt bei einer axialen Bewegung des Ringkörpers 17 in Richtung des Pfeils 17a. Der Ringkörper 17 kann entweder auf einem Flansch 18 gelagert sein, der am umlaufenden Messerkopfteil 7 fest ist oder es ist auf der Buchse 2 der Innenring eines Nadellagers angebracht und der Außenring dieses Nadellagers ist im Ringkörper 17 befestigt.

Der Ringkörper 17 weist eine umlaufende Nut 20 auf. In der Nut 20 laufen an deren Seitenflanken jeweils doppelt vorgesehene Kugellager 21a und 21b ab. Die Kugellager 21a und 21b sind auf einem Bolzen 22a befestigt. Der Befestigungsbereich des Bolzens 22a ist so ausgebildet, daß eins der beiden Kugellager an der einen Flanke der Nut abläuft und das zweite an der jeweils gegenüberliegenden. Hierdurch wird jegliches Spiel zwischen der Kugellagerbefestigung und der Nut 20 ausgeschlossen. Der Bolzen 22a sitzt in einem Schleifring 22. In dem Schleifring 22 ist auch die Verstellmutter 23 einer Kugelrollspindel 24 angeordnet.

Die Kugelrollspindel 24 ist über zwei Lager 24a und 24b im Gehäuse 1 drehbar gelagert.

Am Umfang des Messerkopfes sind drei Kugelrollspindeln 24 gleichmäßig verteilt.

Ein Zwischenrad 27 ist konzentrisch zur Drehachse 51 gelagert. Dieses Zwischenrad 27 koppelt die Drehbewegung der drei Stirnräder 26 der drei am Umfang verteilten Kugelrollspindeln 24. Der Drehantrieb erfolgt über ein Zahnriemenrad 25 und einen nicht dargestellten Zahnriemen. Bei einer Verdrehung der Kugelrollspindeln wandern die Verstellmutter 23 und der Schleifring 22 in Richtung der Drehachse. Diese achsparallele Bewegung wird über den Schleifring 22, den Bolzen 22a und die Kugellager 21a bzw. 21b auf den Ringkörper 17 übertragen.

Im Messerkopf ist ferner eine Zuleitung 28 vorgesehen, welche die Kühlflüssigkeit für die Werkzeuge durch die Drehdurchführung 29 zuführt. Über Ringnuten der Hohlwelle 6 und die Bohrungen 30, 31 und 32 gelangt die Kühlflüssigkeit zum Werkzeugträger 8. Es ist eine Radialnut 33 vorgesehen, die in jeder Stellung des Werkzeugträgers 8 die Bohrung 32 mit der Bohrung 34 in Verbindung hält und den Zufluß der Kühlmittel durch die Bohrungen 35 unmittelbar zu den Werkzeugen 36 ermöglicht.

In der Hohlwelle sind Kühlmittelkanäle vorgesehen, die nich dargestellt sind und die benachbart zu den beiden Hauptlagern 4 und 5 geführt sind. Diese Kühlmittelkanäle gehören zu einem geschlossenen Kühlmittelkreislauf, der im Beipaß zu dem Kühlmittelstrom geführt wird, welcher zur Kühlung der Werkzeuge 36 dient. Der geschlossene Kühlmittelkreislauf dient zur Wärmeabfuhr an den beiden Hauptlagern 4 und 5.

**Patentansprüche**

1. Messerkopf für Schälmaschinen, der mindestens zwei mit einem axialen Abstand zueinander angeordnete Hauptlager für eine Lagerung des gemeinsam mit einer Hohlwelle umlaufenden, die Werkzeugteile tragenden Messerkopfteils aufweist, sowie eine Verstelleinrichtung zum Zustellen der Werkzeuge,
dadurch gekennzeichnet,
daß die Verstelleinrichtung (22, 22a, 21a, 21b, 20, 17, 16) im Bereich eines Hauptlagers (7) mit einem größeren radialen Abstand als dieses Hauptlager von der Drehachse (51) und die Werkzeuge (36) benachbart zu diesem Hauptlager angeordnet sind.

2. Messerkopf nach Anspruch 1,
dadurch gekennzeichnet,
daß die Verstelleinrichtung einen das eine Hauptlager (4) umschließenden Ringkörper (17) aufweist, der eine umlaufende Nut (20) aufweist, an deren Seitenflanken mehrere am Umfang verteilte Ringelemente ablaufen, die an einem ortsfest gelagerten, jedoch axial verstellbaren Träger (22) gehaltert sind.

3. Messerkopf nach Anspruch 1 oder 2,
dadurch gekennzeichnet,
daß die Ringelemente durch Lager (21a; 21b) gebildet sind.

4. Messerkopf nach einem oder mehreren der Ansprüche 1 bis 3,
dadurch gekennzeichnet,
daß am Ringkörper (17) mindestens ein geneigt zur Drehachse (51) angeordneter Schrägflächenbereich vorgesehen ist, der mit einem entsprechenden Schrägflächenbereich des die Werkzeuge (36) tragenden Werkzeughalters (8) derart im Eingriff steht, daß eine axiale Verstellung des Ringkörpers (17) zu einer Veränderung des radial gemessenen Abstands zwischen Werkzeugen (36) und Drehachse (51) führt.

5. Messerkopf nach einem oder mehreren der Ansprüche 1 bis 4,
dadurch gekennzeichnet,
daß die Schrägflächenbereiche von Ringkörper (17) und Werkzeughalter (8) durch einen schräg zur Drehachse (51) angeordneten Bolzen (16) und eine den Bolzen (16) umschließende schräge Bohrung (8a) des Werkzeughalters (8) gebildet sind, wobei der Werkzeughalter (8) radial verschieblich und unverdrehbar im umlaufenden Messerkopfteil (7) geführt ist.

6. Messerkopf nach einem oder mehreren der Ansprüche 1 bis 5,
dadurch gekennzeichnet,
daß der Werkzeughalter (8) als kreiszylindrischer Körper mit mindestens einer zur Zylinderachse parallelen Abflachung (10) ausgebildet ist.

7. Messerkopf nach einem oder mehreren der Ansprüche 1 bis 6,
dadurch gekennzeichnet,
daß unterschiedliche, am Umfang verteilte Lager (21a; 21b) welche an den Seitenflanken einer umlaufenden Nut (20) des Ringkörpers (17) ablaufen, jeweils an unterschiedlichen Flanken der Nut (20) ablaufen.

8. Messerkopf nach einem oder mehreren der Ansprüche 1 bis 7,
dadurch gekennzeichnet,
daß die Kühlmittelzufuhr zu den Werkzeugen (36) durch Kühlmittelkanäle (30, 31, 32) und durch Kühlmittelkanäle (33, 34, 35) des Werkzeugträgers (8) erfolgt.

9. Messerkopf nach Anspruch 8,
dadurch gekennzeichnet,
daß der Werkzeugträger (8) einen Werkzeughalter (9) aufweist, welcher die Schälmesser (36) trägt.

10. Messerkopf nach einem oder mehreren der Ansprüche 1 bis 9,
dadurch gekennzeichnet,
daß das Kühlmittel in einem geschlossenen Kreislauf zur Kühlung der Hauptlager (4; 5) geführt ist.

Fig. 1

Fig. 3

EP 0 501 107 A1

Fig. 2

| | Europäisches Patentamt | EUROPÄISCHER RECHERCHENBERICHT | Nummer der Anmeldung |
|---|---|---|---|

EP    92 10 0219

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 440 398 (HEID) | 1,2,4 | B23B5/12 |
| A | * Seite 8 - Seite 9; Abbildung 1 * | 9 | B23B29/24 |
| | --- | | |
| A | DE-B-2 220 984 (KIESERLING) | | |
| | ----- | | |
| | | | **RECHERCHIERTE SACHGEBIETE (Int. Cl.5)** |
| | | | B23B |

Der vorliegende Recherchenbericht wurde für alle Patentansprüche erstellt

| Recherchenort | Abschlußdatum der Recherche | Prüfer |
|---|---|---|
| DEN HAAG | 21 MAI 1992 | BOGAERT. F.L. |